# EUROPEAN PATENT APPLICATION

(11) **EP 4 604 506 A1**
(43) Date of publication of application: **20.08.2025**
(21) Application number: 23888984.4
(22) Date of filing: 25.10.2023
(51) Int. Cl.: H04M 1/72448, H04M 1/72469, H04M 1/02, H04M 1/72445, G06F 3/041, G06F 3/0484, G06F 3/04817, G06F 3/0488

(54) **ELECTRONIC DEVICE AND METHOD FOR EXTENDING EXPOSED AREA OF DISPLAY**

(30) Priority: 09.11.2022 KR 20220148820
(71) Applicant: Samsung Electronics Co., Ltd., Suwon-si, Gyeonggi-do 16677 (KR)
(72) Inventor: LEE, Wooseok, Suwon-si Gyeonggi-do 16677 (KR); HA, Dohyung, Suwon-si Gyeonggi-do 16677 (KR); KWON, Kijin, Suwon-si Gyeonggi-do 16677 (KR); KIM, Kisung, Suwon-si Gyeonggi-do 16677 (KR); PARK, Minhoo, Suwon-si Gyeonggi-do 16677 (KR); PARK, Sangil, Suwon-si Gyeonggi-do 16677 (KR); JUNG, Gwangchae, Suwon-si Gyeonggi-do 16677 (KR); CHUNG, Chongyoon, Suwon-si Gyeonggi-do 16677 (KR)
(74) Representative: Gulde & Partner
(86) International application number: PCT/KR2023/016649
(87) International publication number: WO 2024/101722

(57) **Abstract**

Presented are an electronic device and a method for extending an exposed area of a display. The method by which the electronic device extends a display comprises the operations of: receiving a first touch input for touching a first object in a first software screen displayed in an exposed area of the display exposed to the outside of the electronic device; receiving a second touch input moving in a specified direction on the first software screen, while maintaining the first touch input; extending, in response to the reception of the second touch input, the exposed area of the display exposed to the outside of the electronic device; dividing the extended exposed area of the display into a first area and a second area; and displaying content related to the first object and the first software screen in the first area and the second area, respectively.

## Description

### [Technical Field]

The disclosure relates to an electronic device and method for extending an exposed area of a display, and more specifically, to an electronic device and method for extending and dividing an exposed area of a deformable display.

### [Background Art]

A display functions as an interface that provides input and output of information. Recent electronic devices have been providing more advanced displays, based on the development of hardware or software, for the sake of improved interaction with users. In an example, the electronic device includes a deformable display, and the display is deformed, whereby the size of an exposed area of the display exposed to the outside of the electronic device can be extended or reduced.

### [Disclosure of Invention]

### [Solution to Problem]

A first aspect of the disclosure may present a method for extending a display in an electronic device, the method including receiving a first touch input that touches a first object in a first software screen displayed in an exposed area of the display exposed to the outside of the electronic device, receiving, while maintaining the first touch input, a second touch input that moves in a specified direction on the first software screen, extending, in response to the receiving of the second touch input, the exposed area of the display exposed to the outside of the electronic device, dividing the extended exposed area of the display into a first area and a second area, and displaying content related to the first object and the first software screen in the first area and the second area, respectively.

In addition, a second aspect of the disclosure may present an electronic device including a flexible display, a memory configured to store instructions, and a processor operatively connected to the flexible display and the memory and configured to execute the instructions, and the processor may execute the instructions and receive a first touch input that touches a first object in a first software screen displayed in an exposed area of the flexible display exposed to the outside of the electronic device, receive, while maintaining the first touch input, a second touch input that moves in a specified direction on the first software screen, extend, in response to the receiving of the second touch input, the exposed area of the flexible display exposed to the outside of the electronic device, divide the extended exposed area of the flexible display into a first area and a second area, and display content related to the first object and the first software screen in the first area and the second area, respectively.

In addition, a third aspect of the disclosure may present a computerreadable recording medium for executing a method for dividing a software screen in an electronic device including an extendable display, the method including receiving a first touch input that touches a first object in a first software screen displayed in an exposed area of the display exposed to the outside of the electronic device, receiving, while maintaining the first touch input, a second touch input that moves in a specified direction on the first software screen, extending, in response to the receiving of the second touch input, the exposed area of the display exposed to the outside of the electronic device, dividing the extended exposed area of the display into a first area and a second area, and displaying content related to the first object and the first software screen in the first area and the second area, respectively.

### [Brief Description of Drawings]

FIG. 1 is a diagram illustrating an overview in which an electronic device extends an exposed area of a display according to a user input and divides and uses the extended exposed area according to an embodiment.
FIG. 2A is a diagram illustrating a first state in which an exposed area of a display of an electronic device is not extended according to an embodiment. FIG. 2B is a diagram illustrating a second state in which the exposed area of the display of the electronic device is extended according to an embodiment.
FIG. 3A is a diagram illustrating a first state in which an exposed area of a display of an electronic device is not extended according to another embodiment, and FIG. 3B is a diagram illustrating a second state in which the exposed area of the display of the electronic device is extended according to another embodiment.
FIG. 4 is a diagram illustrating a guide unit of an electronic device according to an embodiment.
FIG. 5 is a flowchart of a method in which an electronic device including an extendable display divides a software screen according to an embodiment.
FIG. 6 is a flowchart for explaining an operation of an electronic device according to a time for which a first touch input is maintained before a second touch input is received according to an embodiment.
FIG. 7 is a flowchart for explaining a method for selectively presenting the extension of a display according to whether a first software screen is a screen of a preset type according to an embodiment.
FIG. 8 is a diagram illustrating an example in which an electronic device extends a display according to a first touch input and a second touch input on a home screen and divides a screen according to an embodiment.
FIG. 9 is a diagram illustrating an example in which an electronic device extends a display according to a first touch input and a second touch input on a web page and divides a screen according to an embodiment.
FIG. 10 is a diagram illustrating an example in which an electronic device extends a display according to a first touch input and a second touch input on an execution screen of a message application and divides a screen according to an embodiment.
FIG. 11 is a flowchart of a method in which an electronic device extends a display according to a first touch input and a second touch input on an execution screen of a camera application according to an embodiment.
FIG. 12 is a diagram illustrating an example in which an electronic device extends a display according to a first touch input and a second touch input on an execution screen of a camera application according to an embodiment.
FIG. 13 is a flowchart of a method in which an electronic device reduces an extended exposed area of a display according to an embodiment.
FIG. 14 is a diagram illustrating an example of reducing an exposed area of a display when a fourth touch input is received in a first area according to an embodiment.
FIG. 15 is a diagram illustrating an example of reducing an exposed area of a display when a fourth touch input is received in a second area according to an embodiment.
FIG. 16 is a block diagram of an electronic device in a network environment according to various embodiments.

### [Mode for the Invention]

Embodiments of the disclosure will be described below in detail with reference to the accompanying drawings wherein the embodiments of the disclosure may be easily embodied by those skilled in the art to which the disclosure pertains. However, the disclosure may be implemented in various different forms and is not limited to the embodiments described herein. In addition, in order to clearly describe the disclosure in the drawings, portions not related to the description are omitted, and similar portions are given similar reference numerals throughout the specification.

The terms used in the disclosure are described as general terms currently used in consideration of functions stated in the disclosure, but they may mean various other terms depending on the intention of engineers engaged in the relevant field, precedents, the emergence of new technologies, etc. Therefore, the terms used in the disclosure should not be interpreted based on only the names of the terms, but should be interpreted based on the meanings of the terms and the overall contents of the disclosure.

In addition, terms such as first, second, etc. may be used to describe various components, but the components should not be limited by these terms. These terms are used for the purpose of distinguishing one component from another component.

Throughout the specification, when a certain portion is said to be "connected" to another portion, this includes not only a case where it is "directly connected" but also a case where it is "electrically connected" with another element located therebetween. In addition, when a certain portion is said to "include" a certain component, this does not mean excluding another component unless specifically stated otherwise, but rather means that it may further include another component.

Phrases such as "in an embodiment" appearing in various places in the disclosure do not necessarily all refer to the same embodiment.

An embodiment of the disclosure may be represented by functional block constructions and various processing operations. Some or all of these functional blocks may be implemented by various numbers of hardware and/or software constructions performing specific functions. For example, the functional blocks of the disclosure may be implemented by one or more microprocessors, or be implemented by circuit constructions for a predefined function. In addition, for example, the functional blocks of the disclosure may be implemented by various programming or scripting languages. The functional blocks may be implemented by algorithms that are executed by one or more processors. In addition, the disclosure may employ the conventional art for the sake of electronic environment settings, signal processing, and/or data processing, etc. Terms such as "mechanism," "element," "means," and "construction" may be used broadly, and are not limited to mechanical and physical constructions.

In addition, connection lines or connection members between components illustrated in the drawings exemplarily merely represent functional connections and/or physical or circuit connections. In an actual device, connections between the components may be represented by replaceable or added various functional connections, physical connections, or circuit connections.

The disclosure will be described below in detail with reference to the accompanying drawings.

A method for extending a display in an electronic device of an embodiment of the disclosure may include receiving a first touch input that touches a first object in a first software screen displayed in an exposed area of the display exposed to the outside of the electronic device, receiving, while maintaining the first touch input, a second touch input that moves in a specified direction on the first software screen, extending, in response to the receiving of the second touch input, the exposed area of the display exposed to the outside of the electronic device, dividing the extended exposed area of the display into a first area and a second area, and displaying content related to the first object and the first software screen in the first area and the second area, respectively.

In addition, the first touch input may be a touch and hold input, and the second touch input may be a swipe input that moves in the specified direction.

In addition, the first software screen may be a home screen of the electronic device, and the first object may be an execution icon of an application displayed on the home screen.

In addition, the displaying of the content related to the first object and the first software screen respectively may include displaying an execution screen of the application corresponding to the execution icon in the first area, and displaying the home screen in the second area.

In addition, the method may further include receiving a user input that selects a second object in the home screen displayed in the second area, and in response to the selecting of the second object, displaying content related to the second object in the second area.

In addition, the extending of the exposed area of the display may be extending the exposed area, in response to receiving the second touch input within a time less than a first threshold after the first touch input starts.

In addition, the method may further include displaying a pop-up menu related to the first object, in response to maintaining the first touch input for a time greater than the first threshold after the first touch input starts.

In addition, the method may further include identifying whether the first software screen may be a home screen, and the extending of the exposed area of the display may be extending the exposed area of the display, in response to identifying that the first software screen may be the home screen and receiving the second touch input.

In addition, the first software screen may be an execution screen of an Internet browser, and the first object may be an object constituting a page in the Internet browser, and displaying the content related to the first object and the first software screen respectively may be displaying another page linked to the first object in the first area, and displaying the execution screen of the Internet browser in the second area.

In addition, the method may further include receiving a third touch input that touches the first area, receiving, while maintaining the third touch input, a fourth touch input that moves in a direction opposite to the specified direction, reducing, in response to the receiving of the fourth touch input, the exposed area of the display exposed to the outside of the electronic device, and displaying, in the reduced exposed area, content related to the first object displayed in the first area.

In addition, an electronic device of an embodiment of the disclosure may include a flexible display, a memory configured to store instructions, and a processor operatively connected to the flexible display and the memory and configured to execute the instructions. The processor may execute the instructions and receive a first touch input that touches a first object in a first software screen displayed in an exposed area of the flexible display exposed to the outside of the electronic device, receive, while maintaining the first touch input, a second touch input that moves in a specified direction on the first software screen, extend, in response to the receiving of the second touch input, the exposed area of the flexible display exposed to the outside of the electronic device, divide the extended exposed area of the flexible display into a first area and a second area, and display content related to the first object and the first software screen in the first area and the second area, respectively.

In addition, the first touch input may be a touch and hold input, and the second touch input may be a swipe input that moves in the specified direction.

In addition, the first software screen may be a home screen of the electronic device, and the first object may be an execution icon of an application displayed on the home screen.

In addition, the processor may execute the instructions and display an execution screen of the application corresponding to the execution icon in the first area, and display the home screen in the second area.

In addition, the processor may execute the instructions and receive a user input that selects a second object in the home screen displayed in the second area, and in response to the selecting of the second object, display content related to the second object in the second area.

In addition, the processor may execute the instructions and extend the exposed area, in response to receiving the second touch input within a time less than a first threshold after the first touch input starts.

In addition, the processor may execute the instructions and display a pop-up menu related to the first object, in response to maintaining the first touch input for a time greater than the first threshold after the first touch input starts.

In addition, the processor may execute the instructions and identify whether the first software screen is a home screen, and extend the exposed area of the display, in response to identifying that the first software screen is the home screen and receiving the second touch input.

In addition, the first software screen may be an execution screen of an Internet browser, and the first object may be an object constituting a page in the Internet browser, and the processor may execute the instructions and display another page linked to the first object in the first area, and display the execution screen of the Internet browser in the second area.

In addition, an embodiment of the disclosure may present a computerreadable recording medium for executing a method for dividing a software screen in an electronic device including an extendable display, the method including receiving a first touch input that touches a first object in a first software screen displayed in an exposed area of the display exposed to the outside of the electronic device, receiving, while maintaining the first touch input, a second touch input that moves in a specified direction on the first software screen, extending, in response to the receiving of the second touch input, the exposed area of the display exposed to the outside of the electronic device, dividing the extended exposed area of the display into a first area and a second area, and displaying content related to the first object and the first software screen in the first area and the second area, respectively.

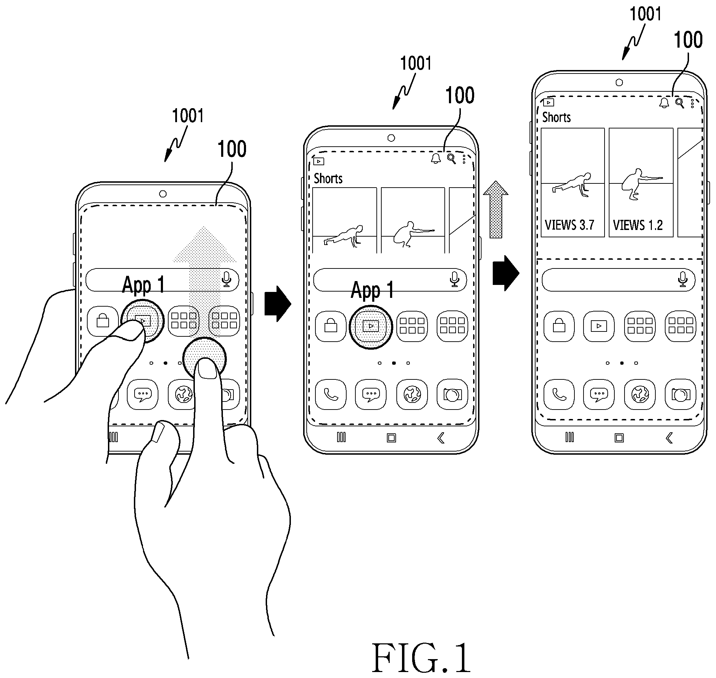

FIG. 1 is a diagram illustrating an overview in which an electronic device extends an exposed area of a display according to a user input and divides and uses the extended exposed area according to an embodiment.

Referring to FIG. 1, an electronic device 1001 may include an extendable display, and may extend an exposed area 100 of a display exposed to the outside of the electronic device 1001 according to a preset user input. The electronic device 1001 may include a deformable display and, for example, a housing of the electronic device 1001 may be slid and the exposed area 100 of the display exposed to the outside of the electronic device 1001 may be extended.

The electronic device 1001 may divide the extended exposed area 100 of the display and display a predefined software screen in each divided area. A user input for extending the exposed area 100 of the display may be set as a combination of a first touch input and a second touch input in the exposed area 100 of the display. Depending on the first touch input and/or the second touch input, the software screen to be displayed in each divided area in the extended exposed area 100 of the display may be determined.

The electronic device 1001 is a device including a deformable display, and may be, for example, a smartphone, a tablet PC, a mobile phone, a personal digital assistant (PDA), a laptop, a media player, a global positioning system (GPS) device, an e-book reader, a digital broadcasting terminal, a navigation device, a digital camera, a wearable device, or other mobile computing devices, but is not limited thereto.

The deformable display of the electronic device 1001 may include a flexible display, and may include, for example, a foldable display and/or a rollable display.

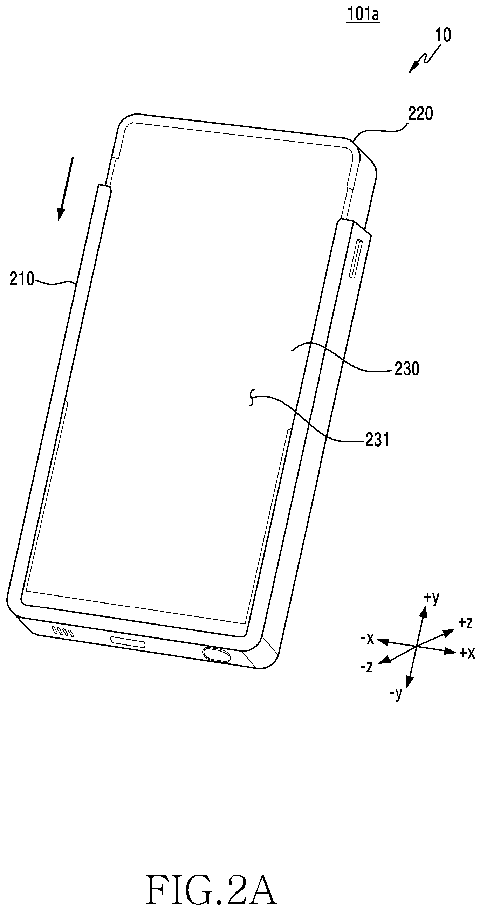

An example of extending an exposed area of a display of an electronic device 1001 will be described below with reference to FIGS. 2A, 2B, 3A, 3B, and 4.

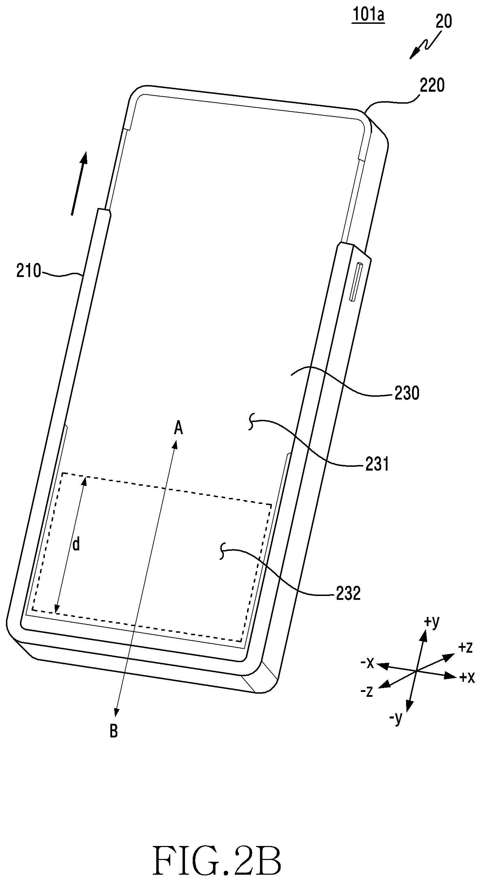

FIG. 2A is a diagram illustrating a first state in which an exposed area of a display of an electronic device is not extended according to an embodiment. FIG. 2B is a diagram illustrating a second state in which the exposed area of the display of the electronic device is extended according to an embodiment.

Referring to FIGS. 2A and 2B, the size (or area) of an exposed area of a flexible display 230 of an electronic device 101a (e.g., electronic device 1001 of FIG. 1) of an embodiment may be changed according to a state transition of the electronic device 101a. For example, the electronic device 101a may have a first state 10 in which, as a second housing 220 slides (e.g., slide-in) in a first direction (e.g., -y direction) with respect to a first housing 210, a portion of the second housing 220 is introduced into the inside of the first housing 210, and in the first state 10 of the electronic device 101a, a first screen area 231 of the flexible display 230 may be exposed to the outside. For another example, the electronic device 101a may have a second state 20 in which, as the second housing 220 slides (e.g., slide-out) in a second direction (e.g., +y direction) with respect to the first housing 210, a portion of the second housing 220 is withdrawn to the outside of the first housing 210, and in the second state 20 of the electronic device 101a, the exposed area of the flexible display 230 may be extended. Accordingly, the extended exposed area of the flexible display 230 may include the first screen area 231 and a second screen area 232.

In an embodiment, the electronic device 101a may include a housing comprised of the first housing 210 and the second housing 220. In an embodiment, the second housing 220 may be arranged to be slidable with respect to the first housing 210. For example, the second housing 220 may be coupled to the first housing 210 and be slidable a specified distance (d) between the first direction (e.g., - y direction) and the second direction (e.g., + y direction) with respect to the first housing 210. In an embodiment, the first housing 210 may accommodate at least a portion of the second housing 220. For example, the first housing 210 may include a trough that is open at its one side and accommodates at least a portion of the second housing 220, and may be coupled to the second housing 220 and surround at least a portion of the second housing 220 through the trough portion of the first housing 210.

In an embodiment, the electronic device 101a may include the flexible display 230 whose at least portion is exposed to the outside of the housing and which forms most of a front surface of the electronic device 101a. The flexible display 230 may include the first screen area 231 and the second screen area 232, and the second screen area 232 may be selectively exposed to the outside according to the sliding of the second housing 220 with respect to the first housing 210. For example, in the first state 10 of the electronic device 101a in which the second housing 220 is slid in the first direction (e.g., -y direction) with respect to the first housing 210, at least a portion of the second screen area 232 may be rolled in the inside of the first housing 210 and not be exposed to the outside. For another example, in the second state 20 of the electronic device 101a in which the second housing 220 is slid in the second direction (e.g., +y direction) with respect to the first housing 210, at least a portion of the second screen area 232 may be rolled out of the inside of the first housing 210 and be exposed to the outside. Based on this, the size (or area) of the exposed area of the flexible display 230 may be changed (e.g., extended or reduced) in response to the sliding of the second housing 220 with respect to the first housing 210.

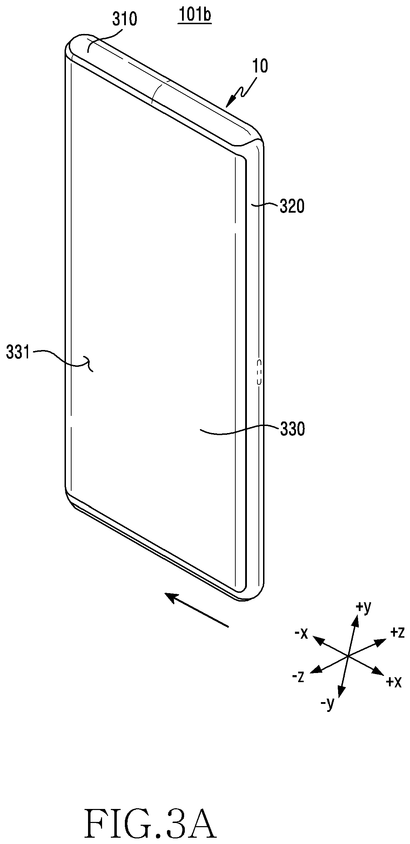

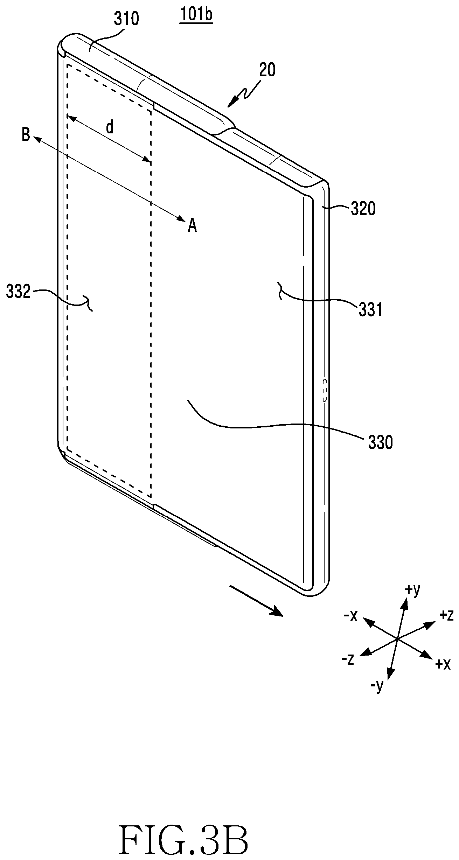

FIG. 3A is a diagram illustrating a first state in which an exposed area of a display of an electronic device is not extended according to another embodiment, and FIG. 3B is a diagram illustrating a second state in which the exposed area of the display of the electronic device is extended according to another embodiment.

Referring to FIGS. 3A and 3B, the size (or area) of an exposed area of a flexible display 330 of an electronic device 101b (e.g., electronic device 1001 of FIG. 1) of another embodiment may be changed according to a state transition of the electronic device 101b. For example, the electronic device 101b may have a first state 10 in which, as a second housing 320 slides (e.g., slide-in) in a third direction (e.g., -x direction) with respect to a first housing 310, a portion of the second housing 320 is introduced into the inside of the first housing 310, and in the first state 10 of the electronic device 101b, a first screen area 331 of the flexible display 330 may be exposed to the outside. For another example, the electronic device 101b may have a second state 20 in which, as the second housing 320 slides (e.g., slide-out) in a fourth direction (e.g., + x direction) with respect to the first housing 310, a portion of the second housing 320 is withdrawn to the outside of the first housing 310, and in the second state 20 of the electronic device 101b, the exposed area of the flexible display 330 may be extended. Accordingly, the extended exposed area of the flexible display 330 may include the first screen area 331 and a second screen area 332.

In an embodiment, the electronic device 101b may include a housing comprised of the first housing 310 and the second housing 320. In an embodiment, the second housing 320 may be arranged to be slidable with respect to the first housing 310. For example, the second housing 320 may be coupled to the first housing 310 and be slidable a specified distance (d) between the third direction (e.g., - x direction) and the fourth direction (e.g., + x direction) with respect to the first housing 310. In an embodiment, the first housing 310 may accommodate at least a portion of the second housing 320. For example, the first housing 310 may include a trough that is open at its one side and accommodates at least a portion of the second housing 320, and may be coupled to the second housing 320 and surround at least a portion of the second housing 320 through the trough portion **of the first** housing 310.

In an embodiment, the electronic device 101b may include the flexible display 330 whose at least portion is exposed to the outside of the housing and which forms most of a front surface of the electronic device 101b. The flexible display 330 may include the first screen area 331 and the second screen area 332, and the second screen area 332 may be selectively exposed to the outside according to the sliding of the second housing 320 with respect to the first housing 310. For example, in the first state 10 of the electronic device 101b in which the second housing 320 is slid in the third direction (e.g., -x direction) with respect to the first housing 310, at least a portion of the second screen area 332 may be rolled in the inside of the first housing 310 and not be exposed to the outside. For another example, in the second state 20 of the electronic device 101b in which the second housing 320 is slid in the fourth direction (e.g., + x direction) with respect to the first housing 310, at least a portion of the second screen area 332 may be rolled out of the inside of the first housing 310 and be exposed to the outside. Based on this, the size (or area) of the exposed area of the flexible display 330 may be changed (e.g., extended or reduced) in response to the sliding of the second housing 320 with respect to the first housing 310.

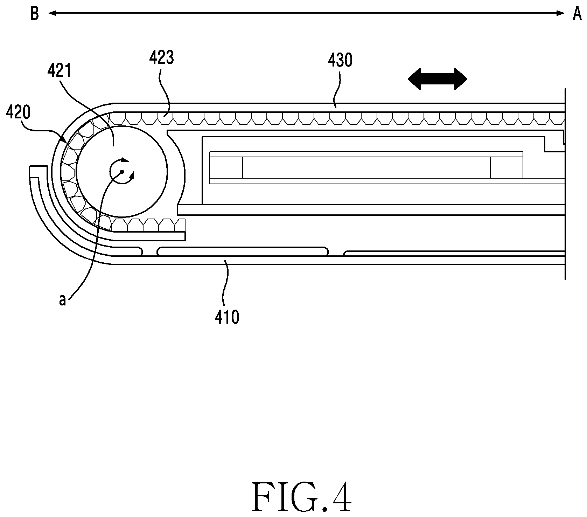

FIG. 4 is a diagram illustrating a guide unit of an electronic device according to an embodiment.

FIG. 4 may be understood as a diagram illustrating a cross-section of the electronic device 1001 taken in an A-B direction illustrated in FIG. 2B or FIG. 3B.

Referring to FIG. 4, an electronic device (e.g., electronic device 1001 of FIG. 1) of an embodiment may include a guide unit 420 that supports the sliding (e.g., sliding-in or sliding-out) of a second housing (e.g., second housing 220 of FIGS. 2A and 2B or second housing 320 of FIGS. 3A and 3B) with respect to a first housing 410. According to various embodiments, the guide unit 420 may also function as a component that supports the change of the size of an exposed area of a flexible display 430, in terms of the fact that the size (or area) of the exposed area of the flexible display 430 changes when the second housing 220 or 320 is slid by the guide unit 420.

In an embodiment, the guide unit 420 may include a rolling member 421 and a rail member 423. The rolling member 421 may be connected (or fixed) to one area of the first housing 410, and may be implemented as a gear having a plurality of protrusions formed on an outer surface of the gear and rotate around a rotation axis (a). The rail member 423 may be connected (or fixed) to one area of the second housing 220 or 320, and may be arranged wherein, while one surface of the rail member 423 supports at least a portion of the flexible display 430, a plurality of protrusions formed on the other surface of the rail member 423 are engaged with the plurality of protrusions of the rolling member 421.

According to an embodiment, when external force (e.g., external force by the user's body) is applied to the second housing 220 or 320, the size of the exposed area of the flexible display 430 may be changed. For example, when the second housing 220 or 320 is slid in or slid out with respect to the first housing 410 by the external force on the second housing 220 or 320, the rail member 423 connected to the second housing 220 or 320 may be pulled and rolled in or rolled out on the rolling member 421 and the size of the exposed area of the flexible display 430 guided by the rail member 423 may be changed.

According to another embodiment, the rolling member 421 may include a rolling actuator, and when the rolling actuator is driven according to a user input (e.g., input to a hardware or software button included in the electronic device 1001), the size of the exposed area of the flexible display 430 may be changed. For example, when the rolling actuator is driven by the user input, the rail member 423 may be rolled in or rolled out with respect to the rolling member 421 according to the rotation of the rolling member 421, and the second housing 220 or 320 connected to the rail member 423 may be slid in or slid out with respect to the first housing 410 and the size of the exposed area of the flexible display 430 guided by the rail member 423 may be changed.

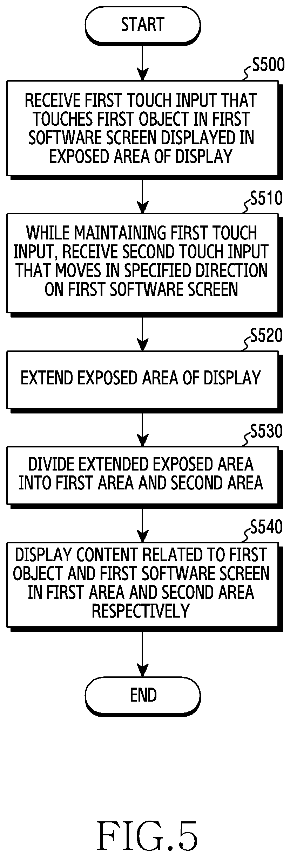

FIG. 5 is a flowchart of a method in which an electronic device including an extendable display divides a software screen according to an embodiment.

In operation S500, an electronic device 1001 may receive a first touch input that touches a first object in a first software screen displayed in an exposed area of a display.

In a first state where the exposed area of the display of the electronic device 1001 is not extended, the electronic device 1001 may display the first software screen on the display.

For example, the first software screen may include a lock screen of the electronic device 1001, a home screen, a setting screen, and an execution screen of an application. In addition, for example, the first object may be a graphical user interface element (GUI element) for executing a specific operation of the electronic device 1001. The first object may include an icon, a button, an image, and/or a text, but is not limited thereto.

For example, the first software screen may be a home screen, and the first object may be an execution icon of an application. For example, the first software screen may be an execution screen of an application, and the first object may be a GUI element in the execution screen of the application.

The first touch input may be an input that selects the first object for a specific time. For example, the first touch input may be a touch and hold input or a long touch input, but is not limited thereto.

In operation S510, while maintaining the first touch input, the electronic device 1001 may receive a second touch input that moves in a specified direction on the first software screen. The second touch input may be a touch input that moves in a specific direction. For example, the second touch input may be a swipe input, a flick input, or a drag input having directionality.

While maintaining the first touch input, the electronic device 1001 may receive a second touch input that moves in a direction in which the exposed area of the display is extended. The direction in which the exposed area of the display is extended may be a direction in which a housing of the electronic device 1001 is slid to extend the exposed area of the display. For example, in order to extend the exposed area of the display, the electronic device 1001 may receive a second touch input that moves towards the top from the bottom of the display within a predefined angle range, and the housing of the electronic device 1001 may be slid in an upper direction of the electronic device 1001.

According to an embodiment, the input timing of the first touch input and the input timing of the second touch input, for extending and utilizing the exposed area of the display, may be preset. For example, in order to extend and utilize the exposed area of the display, the second touch input may be set to be input substantially simultaneously with the first touch input. Alternatively, for example, in order to extend and utilize the exposed area of the display, the second touch input may be set to be input within a predefined time range after the first touch input starts.

In operation S520, the electronic device 1001 may extend the exposed area of the display. As the second touch input that moves in a predefined direction is received while the first touch input is maintained, the electronic device 1001 may extend the exposed area of the display. For example, as shown in FIGS. 2A, 2B, 3A, 3B, and 4, the electronic device 1001 may control the guide unit 420 to slide the second housing 220 or 320 with respect to the first housing 210 or 310 of the electronic device 1001, and extend the exposed area of the display 230, 330, or 430 of the electronic device 1001.

In operation S530, the electronic device 1001 may divide the extended exposed area into a first area and a second area. For example, the electronic device 1001 may divide the extended exposed area into the first area and the second area and display two contents in the extended exposed area. For example, the first area may be an area of an upper portion of the exposed area of the display, and the second area may be an area of a lower portion of the exposed area of the display, but are not limited thereto.

In operation S540, the electronic device 1001 may display content related to the first object and the first software screen in the first area and the second area, respectively.

The electronic device 1001 may display the content related to the first object in the first area, and display the first software screen in the second area. Alternatively, the electronic device 1001 may display the content related to the first object in the second area, and display the first software screen in the first area.

The content related to the first object may be content displayed on the display of the electronic device 1001 as a result of executing a specific function of the electronic device 1001 corresponding to the first object. For example, when the first object is an execution icon of an application, the content related to the first object may be an execution screen of the application. For example, when the first object is a GUI element in an execution screen of an application, the content related to the first object may be content indicating a result of executing a function corresponding to the GUI element among functions of the application.

In the above, operations S520, S530, and S540 are described as operations performed separately, but are not limited thereto. For example, while the exposed area of the display of the electronic device 1001 is extended, the exposed area may be divided into the first area and the second area, and the content related to the first object and the first software screen may be displayed in the first area and the second area, respectively.

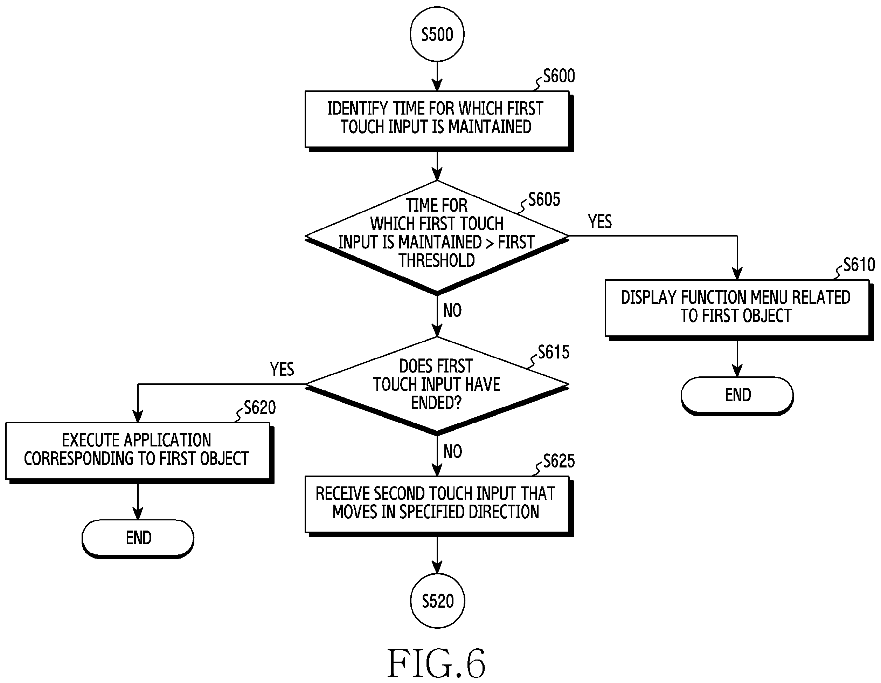

FIG. 6 is a flowchart for explaining an operation of an electronic device according to a time for which a first touch input is maintained before a second touch input is received according to an embodiment.

The operations of FIG. 6 may be performed, for example, between operations S500 and S520 of FIG. 5, but are not limited thereto.

In operation S600, an electronic device 1001 may identify a time for which a first touch input is maintained. The first touch input may be, for example, a touch and hold input or a long touch input. The electronic device 1001 may identify a time for which the first touch input is maintained or ended from the timing when the first touch input starts.

In operation S605, the electronic device 1001 may determine whether the time for which the first touch input is maintained exceeds a first threshold. The first threshold may be set wherein a menu regarding a function of the electronic device 1001 related to a first object is displayed when the first object is touched for the time exceeding the first threshold.

As it is determined that the time for which the first touch input is maintained has exceeded the first threshold as the determination result of operation S605, in operation S610, the electronic device 1001 may display the function menu related to the first object. For example, when the first object is an execution icon of an application and the first touch input exceeds the first threshold, a function menu related to a function for processing the displaying of the first object and a function menu related to a function of the application corresponding to the first object may be displayed on the display of the electronic device 1001. For example, when the first object is the execution icon of the application and the first touch input exceeds the first threshold, a function menu including an item for selecting the first object, an item for deleting the first object, an item for uninstalling the application corresponding to the first object, and an item for setting a widget of the application corresponding to the first object may be displayed around the first object.

As it is determined that the time for which the first touch input is maintained is less than the first threshold as the determination result of operation S605, in operation S615, the electronic device 1001 may determine whether the first touch input has ended.

When it is determined that the first touch input has ended as the determination result of operation S615, in operation S620, the electronic device 1001 may execute the application corresponding to the first object. For example, when the first object is the execution icon of the application, and the first touch input for the time less than the first threshold is ended for the first object, the electronic device 1001 may execute the application corresponding to the first object.

When it is determined that the first touch input has not ended as the determination result of operation S615, in operation S625, the electronic device 1001 may receive a second touch input that moves in a specified direction. While maintaining the first touch input for the time less than the first threshold, the electronic device 1001 may receive the second touch input. The second touch input may be a touch input that moves in a specific direction. For example, the second touch input may be a swipe input, a flick input, or a drag input having directionality.

While maintaining the first touch input, the electronic device 1001 may receive a second touch input that moves in a direction in which the exposed area of the display is extended. The direction in which the exposed area of the display is extended may be a direction in which a housing of the electronic device 1001 is slid to extend the exposed area of the display. For example, in order to extend the exposed area of the display, the electronic device 1001 may receive a second touch input that moves towards the top from the bottom of the display within a predefined angle range, and the housing of the electronic device 1001 may be slid in an upper direction of the electronic device 1001.

According to an embodiment, the input timing of the first touch input and the input timing of the second touch input, for extending and utilizing the exposed area of the display, may be preset. For example, in order to extend and utilize the exposed area of the display, the second touch input may be set to be input substantially simultaneously with the first touch input. Alternatively, for example, in order to extend and utilize the exposed area of the display, the second touch input may be set to be input within a first threshold time after the first touch input starts.

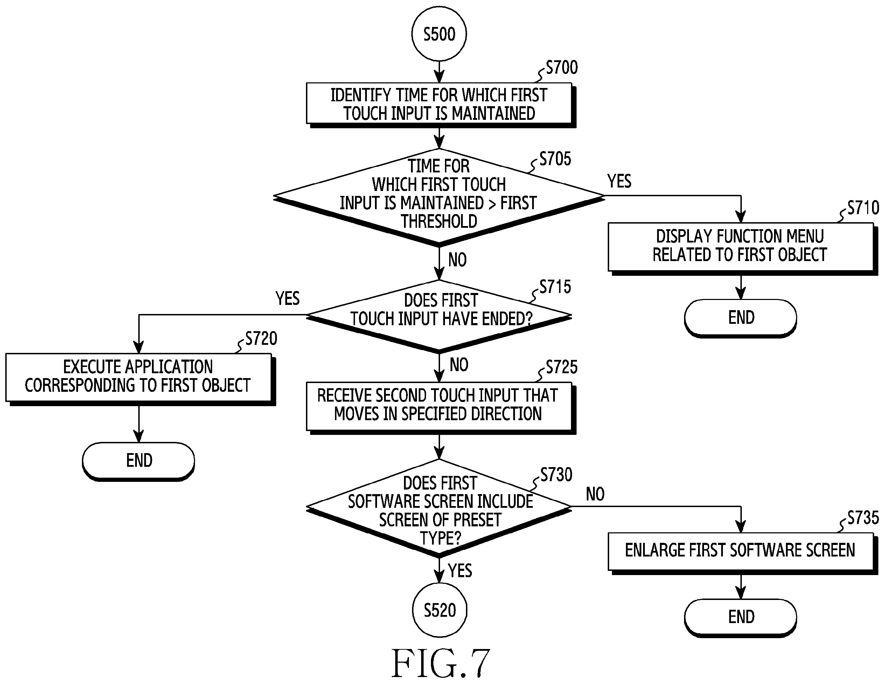

FIG. 7 is a flowchart for explaining a method for selectively presenting the extension of a display depending on whether a first software screen is a screen of a preset type according to an embodiment.

The operations of FIG. 7 may be performed, for example, between operations S500 and S520 of FIG. 5, but are not limited thereto. Since operations S700 to S725 of FIG. 7 correspond to operations S600 to S625 of FIG. 6, their descriptions will be omitted for convenience.

In operation S730, the electronic device 1001 may determine whether a first software screen is a screen of a preset type. For example, the electronic device 1001 may determine whether the first software screen is a screen of a type including an application execution icon. For example, the electronic device 1001 may determine whether the first software screen is a home screen. For example, the electronic device 1001 may determine whether the first software screen is a screen that presents a list of application execution icons.

When it is determined that the first software screen is the screen of the preset type as the determination result of operation S730, the electronic device 1001 may perform operation S520.

When it is determined that the first software screen is not the screen of the preset type as the determination result of operation S730, in operation S735, the electronic device 1001 may enlarge the first software screen.

When the first software screen is not the screen of the preset type, the electronic device 1001 may present a function of enlarging the first software screen according to a first touch input and a second touch input, and may not present a function of extending a display. Accordingly, the function of extending the display according to the first touch input and the second touch input may be prevented from conflicting with the function of enlarging the software screen on the display.

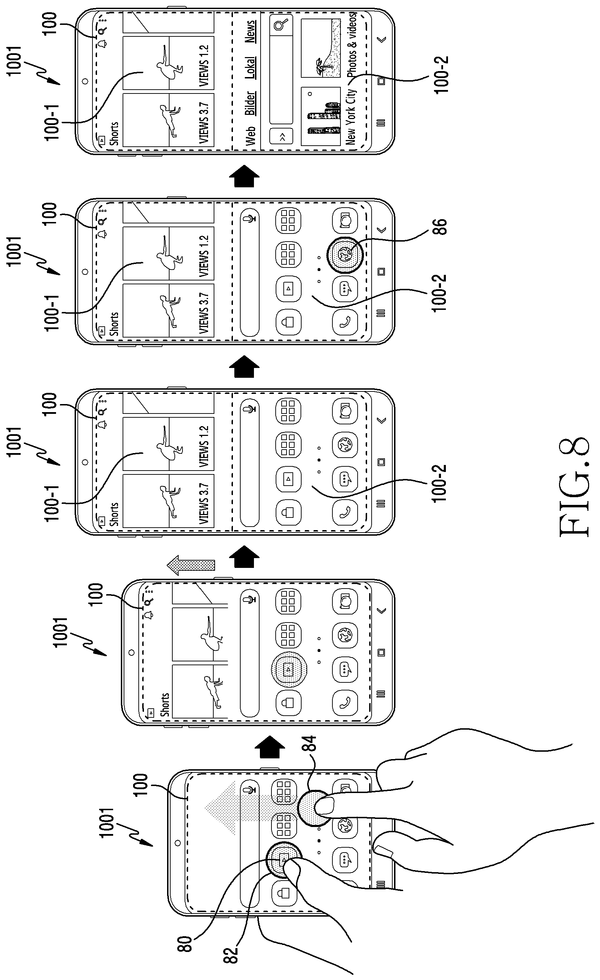

FIG. 8 is a diagram illustrating an example in which an electronic device extends a display according to a first touch input and a second touch input on a home screen and divides a screen according to an embodiment.

Referring to FIG. 8, a home screen may be displayed in an exposed area 100 of a display of an electronic device 1001 in a state where the exposed area 100 of the display is not extended.

The electronic device 1001 may receive a first touch input 82 touching a first icon 80 in the home screen, and while maintaining the first touch input 82, the electronic device 1001 may receive a second touch input 84 that moves towards the top of the electronic device 1001.

As the first touch input 82 and the second touch input 84 are received, the electronic device 1001 may slide a housing and extend the exposed area 100 of the display, and divide the extended exposed area 100 into a first area 100-1 and a second area 100-2.

The electronic device 1001 may execute a first application corresponding to the first icon 80, display an execution screen of the first application in the first area 100-1, and display the home screen in the second area 100-2.

When a second icon 86 in the home screen displayed in the second area 100-2 is selected, the electronic device 1001 may execute a second application corresponding to the second icon 86, and display an execution screen of the second application in the second area 100-2.

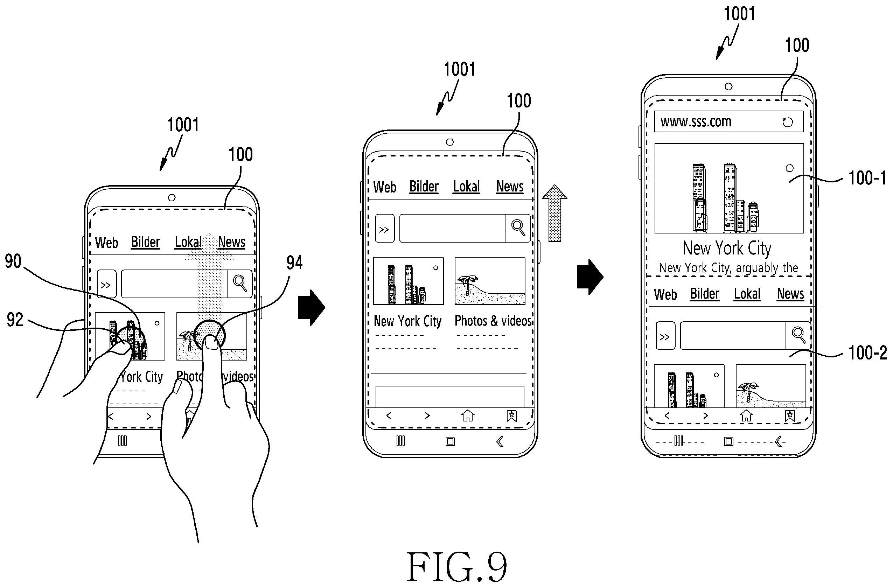

FIG. 9 is a diagram illustrating an example in which an electronic device extends a display according to a first touch input and a second touch input on a web page and divides a screen according to an embodiment.

Referring to FIG. 9, a web page presented by a web browser application may be displayed in an exposed area 100 of a display of an electronic device 1001 in a state where the exposed area 100 of the display is not extended.

The electronic device 1001 may receive a first touch input 92 touching an image 90 that is a GUI element in the web page, and while maintaining the first touch input 92, the electronic device 1001 may receive a second touch input 94 that moves towards the top of the electronic device 1001.

When the first touch input 92 and the second touch input 94 are received, the electronic device 1001 may slide a housing and extend the exposed area 100 of the display, and divide the extended exposed area 100 into a first area 100-1 and a second area 100-2.

The electronic device 1001 may display another web page linked to the image 90 in the first area 100-1, and display the web page, which had been displayed in the exposed area 100 before extension, in the second area 100-2.

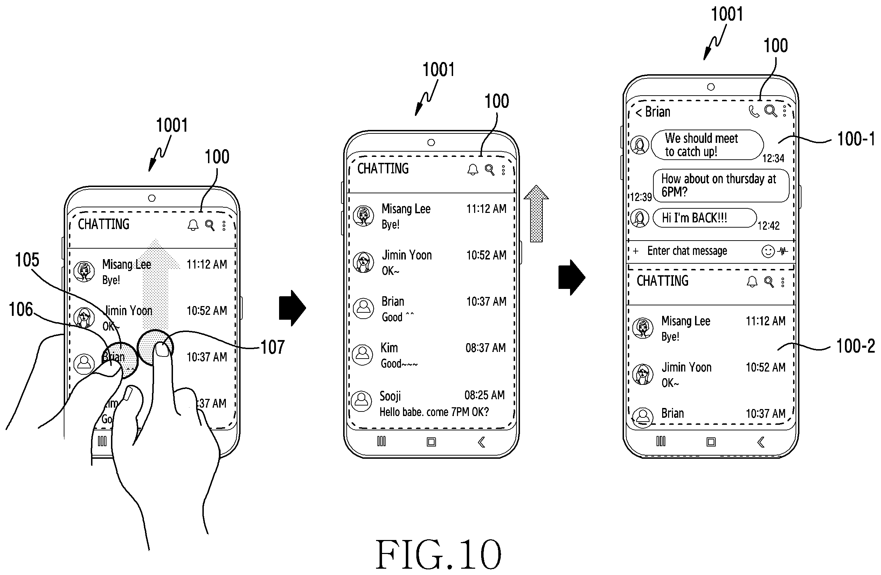

FIG. 10 is a diagram illustrating an example in which an electronic device extends a display according to a first touch input and a second touch input on an execution screen of a message application and divides a screen according to an embodiment.

Referring to FIG. 10, an execution screen of a message application may be displayed in an exposed area 100 of a display of an electronic device 1001 in a state where the exposed area 100 of the display is not extended. For example, the execution screen of the message application including a list of chat rooms may be displayed in the exposed area 100.

The electronic device 1001 may receive a first touch input 106 touching a specific chat room 105 on the execution screen of the message application, and while maintaining the first touch input 106, the electronic device 1001 may receive a second touch input 107 that moves towards the top of the electronic device 1001.

As the first touch input 106 and the second touch input 107 are received, the electronic device 1001 may slide a housing and extend the exposed area 100 of the display, and may divide the extended exposed area 100 into a first area 100-1 and a second area 100-2.

The electronic device 1001 may display chat content in the chat room 105 in the first area 100-1, and display the list of chat rooms, which had been displayed in the exposed area 100 before extension, in the second area 100-2.

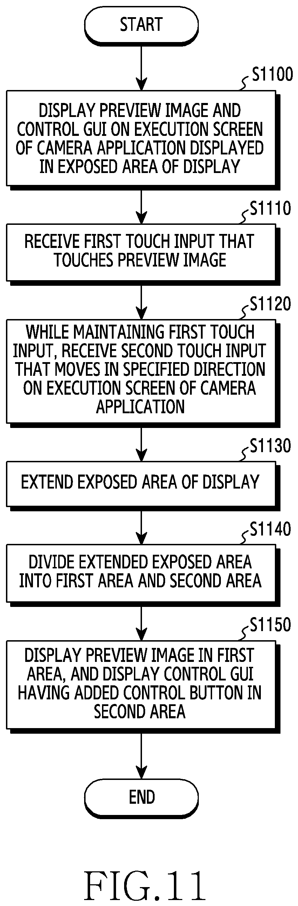

FIG. 11 is a flowchart of a method in which an electronic device extends a display according to a first touch input and a second touch input on an execution screen of a camera application according to an embodiment.

In operation S1100, an electronic device 1001 may display a preview image and a control GUI for controlling a camera application, on an execution screen of the camera application displayed in an exposed area of a display. In a first state where the exposed area of the display of the electronic device 1001 is not extended, the electronic device 1001 may display the execution screen of the camera application on the display. For example, when the camera application is executed and a shooting function is activated, the electronic device 1001 may display, on the display, the execution screen of the camera application including the preview image and the control GUI for controlling the camera application. For example, the control GUI may include buttons for changing a shooting mode, a button for starting shooting, and a button for switching between a front camera and a rear camera, but is not limited thereto.

In operation S1110, the electronic device 1001 may receive a first touch input that touches the preview image. The first touch input may be an input that selects a first object for a specific time. For example, the first touch input may be a touch and hold input or a long touch input, but is not limited thereto.

In operation S1120, while maintaining the first touch input, the electronic device 1001 may receive a second touch input that moves in a specified direction on the execution screen of the camera application. The second touch input may be a touch input that moves in a specific direction. For example, the second touch input may be a swipe input, a flick input, or a drag input having directionality.

While maintaining the first touch input, the electronic device 1001 may receive a second touch input that moves in a direction in which the exposed area of the display is extended. The direction in which the exposed area of the display is extended may be a direction in which a housing of the electronic device 1001 is slid to extend the exposed area of the display. For example, in order to extend the exposed area of the display, the electronic device 1001 may receive a second touch input that moves towards the top from the bottom of the display within a predefined angle range, and the housing of the electronic device 1001 is slid in an upper direction of the electronic device 1001.

According to an embodiment, in order to present a function of extending the exposed area of the display, a second touch input may be set to start in an area not the preview image in the exposed area of the display. For example, when the second touch input starts in an area where the control GUI rather than the preview image is displayed in the exposed area of the display, a function of extending the display and dividing may be presented based on the first touch input and the second touch input.

When an execution screen of an application is displayed, a location of a second touch input for extending the display may be set limitedly, whereby a function of extending the display according to a first touch input and the second touch input may be prevented from conflicting with a function of enlarging a software screen on the display.

In operation S1130, the electronic device 1001 may extend the exposed area of the display. As the second touch input that moves in a specified direction is received while the first touch input is maintained, the electronic device 1001 may extend the exposed area of the display. For example, as shown in FIGS. 2A, 2B, 3A, 3B, and 4, the electronic device 1001 may control the guide unit 420 to slide the second housing 220 or 320 with respect to the first housing 210 or 310 of the electronic device 1001, and extend the exposed area of the display 230, 330, or 430 of the electronic device 1001.

In operation S1140, the electronic device 1001 may divide the extended exposed area into a first area and a second area. For example, the electronic device 1001 may divide the extended exposed area into the first area and the second area and display two contents in the extended exposed area. For example, the first area may be an area of an upper portion of the exposed area of the display, and the second area may be an area of a lower portion of the exposed area of the display, but are not limited thereto.

In operation S1150, the electronic device 1001 may display the preview image in the first area, and display the control GUI having an added control button in the second area.

For example, the added button of the control GUI may include, but is not limited to, buttons for changing the settings of a camera for shooting and buttons for editing a captured image.

In the above, operations S1130, S1140, and S1150 are described as operations performed separately, but are not limited thereto. For example, while the exposed area of the display of the electronic device 1001 is extended, the exposed area may be divided into the first area and the second area, and content related to a first object and a first software screen may be displayed in the first area and the second area, respectively.

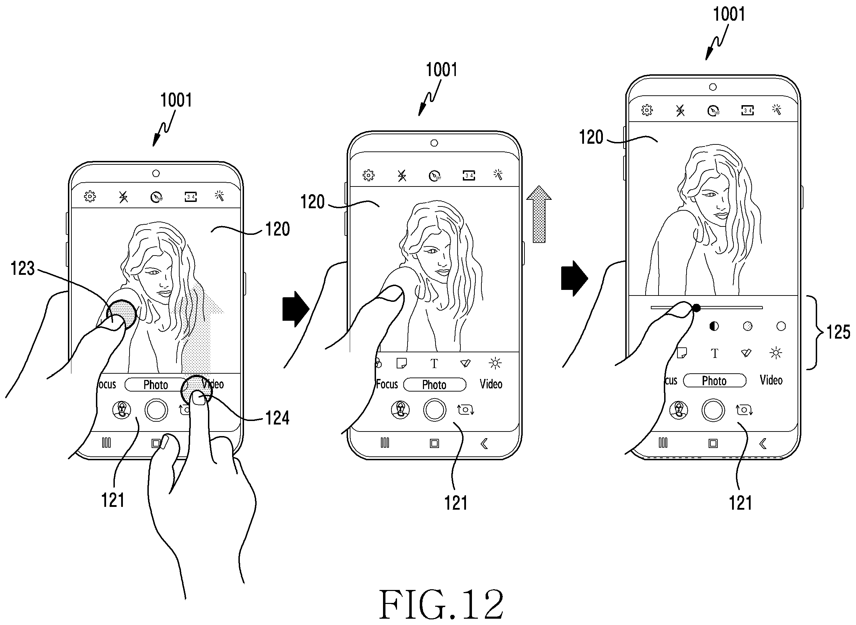

FIG. 12 is a diagram illustrating an example in which an electronic device extends a display according to a first touch input and a second touch input on an execution screen of a camera application according to an embodiment.

Referring to FIG. 12, an execution screen of a camera application may be displayed in an exposed area of a display of an electronic device 1001 in a state where the exposed area of the display is not extended. The electronic device 1001 may display, for example, an execution screen of a camera application including a preview image 120 and a control GUI 121.

The electronic device 1001 may receive a first touch input 123 for the preview image 120, and while maintaining the first touch input 123, the electronic device 1001 may receive a second touch input 124 that moves towards the top of the electronic device 1001. In order to present a function of extending the display, the second touch input 124 may need to start on the control GUI 121 rather than the preview image 120.

As the first touch input 123 and the second touch input 124 are received, the electronic device 1001 may slide a housing and extend the exposed area of the display. In addition, the electronic device 1001 may display the preview image 120 and the control GUI 121 including added control buttons 125, in the extended exposed area.

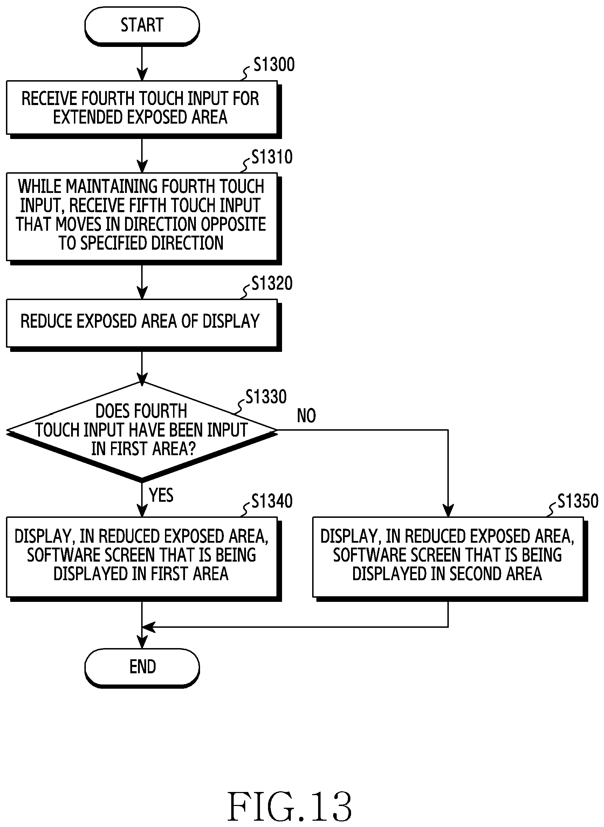

FIG. 13 is a flowchart of a method in which an electronic device reduces an extended exposed area of a display according to an embodiment.

Referring to FIG. 13, an electronic device 1001 may restore an extended exposed area of a display to a state before extension.

In operation S1300, the electronic device 1001 may receive a fourth touch input for the extended exposed area. In a state where the exposed area of the display of the electronic device 1001 is extended, the electronic device 1001 may display software screens in a first area and a second area of the extended exposed area, respectively. The fourth touch input may be an input that touches the extended exposed area of the display for a specific time. For example, the fourth touch input may be a touch and hold input or a long touch input, but is not limited thereto.

In operation S1310, while maintaining the fourth touch input, the electronic device 1001 may receive a fifth touch input that moves in a direction opposite to a specified direction. The fifth touch input may be a touch input that moves in a specific direction. For example, the fifth touch input may be a swipe input, a flick input, or a drag input having directionality.

While maintaining the fourth touch input, the electronic device 1001 may receive a fifth touch input that moves in a direction opposite to a direction in which the exposed area of the display is extended. The direction opposite to the direction in which the exposed area of the display is extended may be a direction in which a housing of the electronic device 1001 is slid to reduce the extended exposed area of the display. For example, in order to reduce the extended exposed area of the display, the electronic device 1001 may receive a fifth touch input that moves in a direction of going from the top to the bottom of the display within a predefined angle range, and the housing of the electronic device 1001 may be slid in a lower direction of the electronic device 1001.

According to an embodiment, the input timing of the fourth touch input and the input timing of the fifth touch input, for reducing the exposed area of the display, may be preset. For example, in order to reduce the exposed area of the display, the fifth touch input may be set to be input substantially simultaneously with the fourth touch input. Alternatively, for example, in order to reduce the exposed area of the display, the fifth touch input may be set to be input within a predefined time range after the fourth touch input starts.

In operation S1320, the electronic device 1001 may reduce the exposed area of the display. As the fifth touch input that moves in the direction opposite to the specified direction is received while the fourth touch input is maintained, the electronic device 1001 may reduce the extended exposed area of the display. For example, as shown in FIGS. 2A, 2B, 3A, 3B, and 4, the electronic device 1001 may control the guide unit 420 to slide the second housing 220 or 320 with respect to the first housing 210 or 310 of the electronic device 1001, and reduce the extended exposed area of the display 230, 330, or 430 of the electronic device 1001.

In operation S1330, the electronic device 1001 may determine whether the fourth touch input had been input in a first area. The electronic device 1001 may determine whether the fourth touch input had been input through the first area or whether the fourth touch input had been input through a second area, among the first area and the second area that are divided areas of the extended exposed area.

As it is determined that the fourth touch input had been input in the first area as the determination result of operation S1330, in operation S1340, the electronic device 1001 may display, in the reduced exposed area, a software screen that is being displayed in the first area. For example, when an execution screen of an application of a first object had been displayed in the first area of the extended exposed area, the electronic device 1001 may display the execution screen of the application of the first object in the reduced exposed area.

As it is determined that the fourth touch input had not been input in the first area as the determination result of operation S1330, in operation S1350, the electronic device 1001 may display, in the reduced exposed area, a software screen that is being displayed in the second area. For example, as it is determined that the fourth touch input had been input in the second area, the electronic device 1001 may display, in the reduced exposed area, a software screen that is being displayed in the second area. For example, when a home screen had been displayed in the second area of the extended exposed area, the electronic device 1001 may display the home screen in the reduced exposed area.

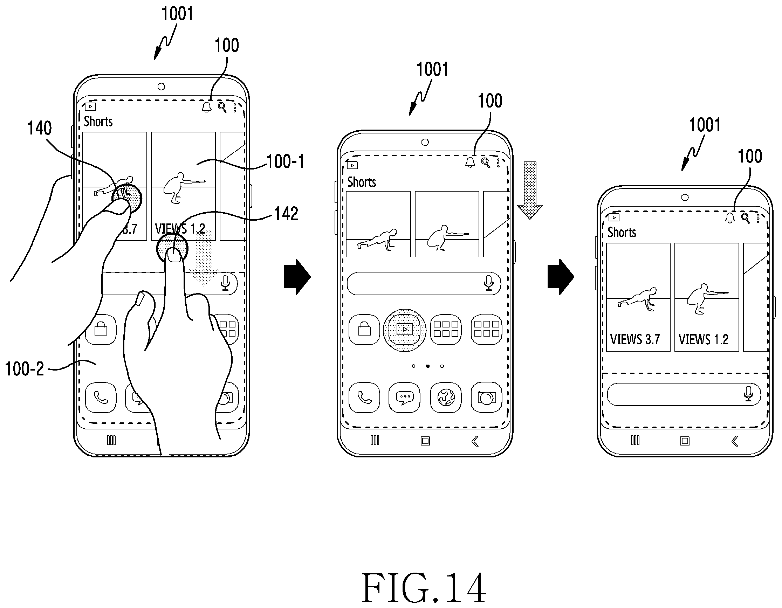

FIG. 14 is a diagram illustrating an example of reducing an exposed area of a display when a fourth touch input is received in a first area according to an embodiment.

Referring to FIG. 14, an application presenting video content may be displayed in a first area 100-1 of an extended exposed area 100 of an electronic device 1001, and a home screen may be displayed in a second area 100-2.

The electronic device 1001 may receive a third touch input 140 that is input through the first area 100-1 and a fourth touch input 142 that moves towards the bottom of the electronic device 1001. For example, while maintaining the third touch input 140 for a time within a first threshold, the electronic device 1001 may receive the fourth touch input 142.

Thereafter, the electronic device 1001 may reduce the extended exposed area 100 of the display, and restore the extended exposed area 100 to a state before extension. The electronic device 1001 may display, in the reduced exposed area 100, the application presenting the video content that had been displayed in the first area 100-1.

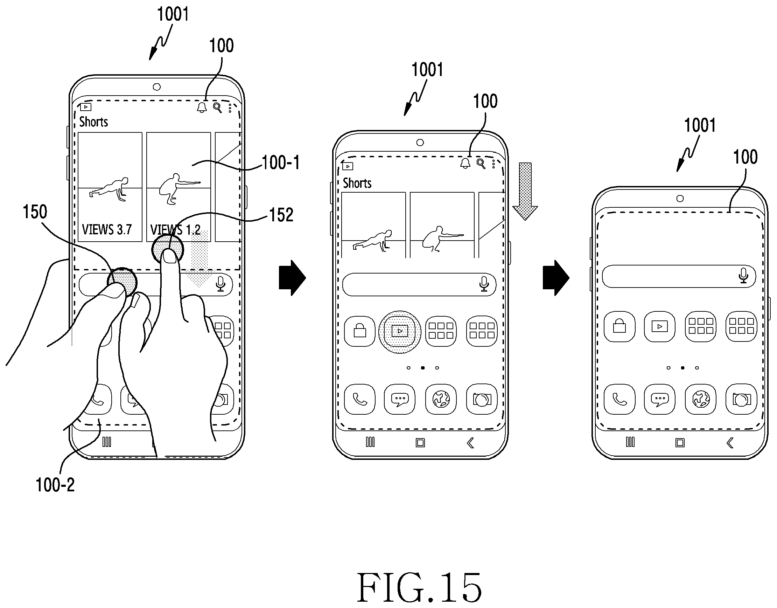

FIG. 15 is a diagram illustrating an example of reducing an exposed area of a display when a fourth touch input is received in a second area according to an embodiment.

Referring to FIG. 15, an application presenting video content may be displayed in a first area 100-1 of an extended exposed area 100 of an electronic device 1001, and a home screen may be displayed in a second area 100-2.

The electronic device 1001 may receive a third touch input 150 that is input through the second area 100-2 and a fourth touch input 152 that moves towards the bottom of the electronic device 1001. For example, while maintaining the third touch input 150 for a time within a first threshold, the electronic device 1001 may receive the fourth touch input 152.

Thereafter, the electronic device 1001 may reduce the extended exposed area 100 of the display, and restore the extended exposed area 100 to a state before extension. The electronic device 1001 may display, in the reduced exposed area 100, the home screen that had been displayed in the second area 100-2.

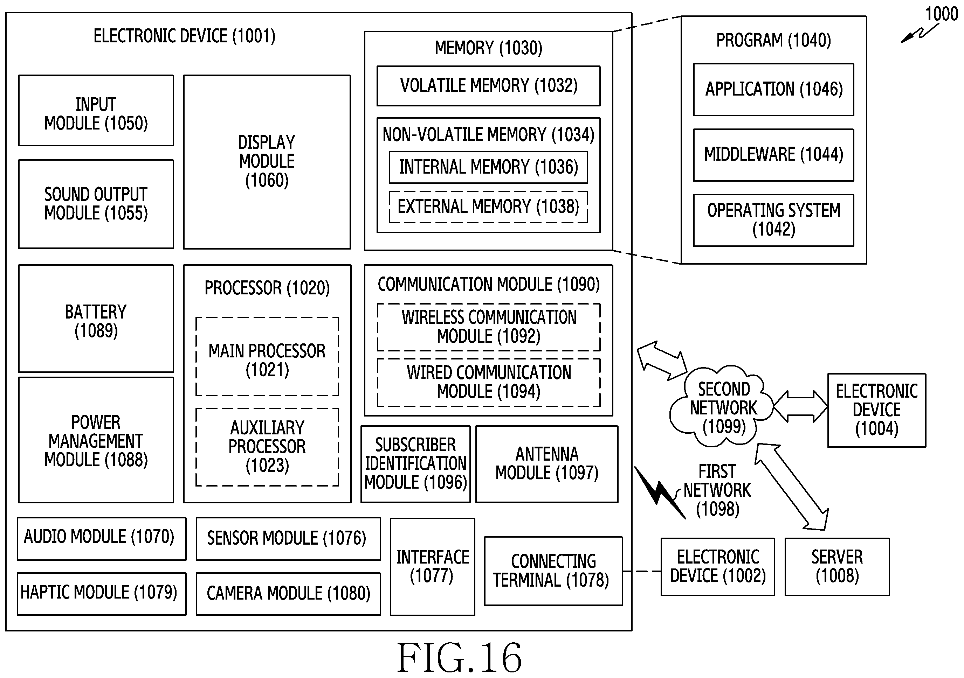

Fig. 16 is a block diagram illustrating an electronic device 1001 in a network environment 1000 according to various embodiments. Referring to Fig. 16, the electronic device 1001 in the network environment 1000 may communicate with an electronic device 1002 via a first network 1098 (e.g., a short-range wireless communication network), or at least one of an electronic device 1004 or a server 1008 via a second network 1099 (e.g., a long-range wireless communication network). According to an embodiment, the electronic device 1001 may communicate with the electronic device 1004 via the server 1008. According to an embodiment, the electronic device 1001 may include a processor 1020, memory 1030, an input module 1050, a sound output module 1055, a display module 1060, an audio module 1070, a sensor module 1076, an interface 1077, a connecting terminal 1078, a haptic module 1079, a camera module 1080, a power management module 1088, a battery 1089, a communication module 1090, a subscriber identification module(SIM) 1096, or an antenna module 1097. In some embodiments, at least one of the components (e.g., the connecting terminal 1078) may be omitted from the electronic device 1001, or one or more other components may be added in the electronic device 1001. In some embodiments, some of the components (e.g., the sensor module 1076, the camera module 1080, or the antenna module 1097) may be implemented as a single component (e.g., the display module 1060).

The processor 1020 may execute, for example, software (e.g., a program 1040) to control at least one other component (e.g., a hardware or software component) of the electronic device 1001 coupled with the processor 1020, and may perform various data processing or computation. According to one embodiment, as at least part of the data processing or computation, the processor 1020 may store a command or data received from another component (e.g., the sensor module 1076 or the communication module 1090) in volatile memory 1032, process the command or the data stored in the volatile memory 1032, and store resulting data in non-volatile memory 1034. According to an embodiment, the processor 1020 may include a main processor 1021 (e.g., a central processing unit (CPU) or an application processor (AP)), or an auxiliary processor 1023 (e.g., a graphics processing unit (GPU), a neural processing unit (NPU), an image signal processor (ISP), a sensor hub processor, or a communication processor (CP)) that is operable independently from, or in conjunction with, the main processor 1021. For example, when the electronic device 1001 includes the main processor 1021 and the auxiliary processor 1023, the auxiliary processor 1023 may be adapted to consume less power than the main processor 1021, or to be specific to a specified function. The auxiliary processor 1023 may be implemented as separate from, or as part of the main processor 1021.

The auxiliary processor 1023 may control at least some of functions or states related to at least one component (e.g., the display module 1060, the sensor module 1076, or the communication module 1090) among the components of the electronic device 1001, instead of the main processor 1021 while the main processor 1021 is in an inactive (e.g., sleep) state, or together with the main processor 1021 while the main processor 1021 is in an active state (e.g., executing an application). According to an embodiment, the auxiliary processor 1023 (e.g., an image signal processor or a communication processor) may be implemented as part of another component (e.g., the camera module 1080 or the communication module 1090) functionally related to the auxiliary processor 1023. According to an embodiment, the auxiliary processor 1023 (e.g., the neural processing unit) may include a hardware structure specified for artificial intelligence model processing. An artificial intelligence model may be generated by machine learning. Such learning may be performed, e.g., by the electronic device 1001 where the artificial intelligence is performed or via a separate server (e.g., the server 1008). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1030 may store various data used by at least one component (e.g., the processor 1020 or the sensor module 1076) of the electronic device 1001. The various data may include, for example, software (e.g., the program 1040) and input data or output data for a command related thererto. The memory 1030 may include the volatile memory 1032 or the non-volatile memory 1034.

The program 1040 may be stored in the memory 1030 as software, and may include, for example, an operating system (OS) 1042, middleware 1044, or an application 1046.

The input module 1050 may receive a command or data to be used by another component (e.g., the processor 1020) of the electronic device 1001, from the outside (e.g., a user) of the electronic device 1001. The input module 1050 may include, for example, a microphone, a mouse, a keyboard, a key (e.g., a button), or a digital pen (e.g., a stylus pen).

The sound output module 1055 may output sound signals to the outside of the electronic device 1001. The sound output module 1055 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1060 may visually provide information to the outside (e.g., a user) of the electronic device 1001. The display module 1060 may include, for example, a display, a hologram device, or a projector and control circuitry to control a corresponding one of the display, hologram device, and projector. According to an embodiment, the display module 1060 may include a touch sensor adapted to detect a touch, or a pressure sensor adapted to measure the intensity of force incurred by the touch.

The audio module 1070 may convert a sound into an electrical signal and vice versa. According to an embodiment, the audio module 1070 may obtain the sound via the input module 1050, or output the sound via the sound output module 1055 or a headphone of an external electronic device (e.g., an electronic device 1002) directly (e.g., wiredly) or wirelessly coupled with the electronic device 1001.

The sensor module 1076 may detect an operational state (e.g., power or temperature) of the electronic device 1001 or an environmental state (e.g., a state of a user) external to the electronic device 1001, and then generate an electrical signal or data value corresponding to the detected state. According to an embodiment, the sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device (e.g., the electronic device 1002) directly (e.g., wiredly) or wirelessly. According to an embodiment, the interface 1077 may include, for example, a high definition multimedia interface (HDMI), a universal serial bus (USB) interface, a secure digital (SD) card interface, or an audio interface.

A connecting terminal 1078 may include a connector via which the electronic device 1001 may be physically connected with the external electronic device (e.g., the electronic device 1002). According to an embodiment, the connecting terminal 1078 may include, for example, a HDMI connector, a USB connector, a SD card connector, or an audio connector (e.g., a headphone connector).

The haptic module 1079 may convert an electrical signal into a mechanical stimulus (e.g., a vibration or a movement) or electrical stimulus which may be recognized by a user via his tactile sensation or kinesthetic sensation. According to an embodiment, the haptic module 1079 may include, for example, a motor, a piezoelectric element, or an electric stimulator.

The camera module 1080 may capture a still image or moving images. According to an embodiment, the camera module 1080 may include one or more lenses, image sensors, image signal processors, or flashes.

The power management module 1088 may manage power supplied to the electronic device 1001. According to one embodiment, the power management module 1088 may be implemented as at least part of, for example, a power management integrated circuit (PMIC).

The battery 1089 may supply power to at least one component of the electronic device 1001. According to an embodiment, the battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more communication processors that are operable independently from the processor 1020 (e.g., the application processor (AP)) and supports a direct (e.g., wired) communication or a wireless communication. According to an embodiment, the communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module or a power line communication (PLC) module). A corresponding one of these communication modules may communicate with the external electronic device via the first network 1098 (e.g., a short-range communication network, such as Bluetooth^{™}, wirelessfidelity (Wi-Fi) direct, or infrared data association (IrDA)) or the second network 1099 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1092 may identify and authenticate the electronic device 1001 in a communication network, such as the first network 1098 or the second network 1099, using subscriber information (e.g., international mobile subscriber identity (IMSI)) stored in the subscriber identification module 1096.

The wireless communication module 1092 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1092 may support a high-frequency band (e.g., the mmWave band) to achieve, e.g., a high data transmission rate. The wireless communication module 1092 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1092 may support various requirements specified in the electronic device 1001, an external electronic device (e.g., the electronic device 1004), or a network system (e.g., the second network 1099). According to an embodiment, the wireless communication module 1092 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1097 may transmit or receive a signal or power to or from the outside (e.g., the external electronic device) of the electronic device 1001. According to an embodiment, the antenna module 1097 may include an antenna including a radiating element composed of a conductive material or a conductive pattern formed in or on a substrate (e.g., a printed circuit board (PCB)). According to an embodiment, the antenna module 1097 may include a plurality of antennas (e.g., array antennas). In such a case, at least one antenna appropriate for a communication scheme used in the communication network, such as the first network 1098 or the second network 1099, may be selected, for example, by the communication module 1090 (e.g., the wireless communication module 1092) from the plurality of antennas. The signal or the power may then be transmitted or received between the communication module 1090 and the external electronic device via the selected at least one antenna. According to an embodiment, another component (e.g., a radio frequency integrated circuit (RFIC)) other than the radiating element may be additionally formed as part of the antenna module 1097.

According to various embodiments, the antenna module 1097 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1001 and the external electronic device 1004 via the server 1008 coupled with the second network 1099. Each of the electronic devices 1002 or 1004 may be a device of a same type as, or a different type, from the electronic device 1001. According to an embodiment, all or some of operations to be executed at the electronic device 1001 may be executed at one or more of the external electronic devices 1002, 1004, or 1008. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1001. The electronic device 1001 may provide the outcome, with or without further processing of the outcome, as at least part of a reply to the request. To that end, a cloud computing, distributed computing, mobile edge computing (MEC), or client-server computing technology may be used, for example. The electronic device 1001 may provide ultra low-latency services using, e.g., distributed computing or mobile edge computing. In another embodiment, the external electronic device 1004 may include an internet-of-things (IoT) device. The server 1008 may be an intelligent server using machine learning and/or a neural network. According to an embodiment, the external electronic device 1004 or the server 1008 may be included in the second network 1099. The electronic device 1001 may be applied to intelligent services (e.g., smart home, smart city, smart car, or healthcare) based on 5G communication technology or IoT-related technology.

The processor 1020 may execute the program 1040 stored in the memory 1030 and control the operations of the electronic device 1001 of FIGS. 1 to 15.

The processor 1020 may control the display module 1060 and receive a first touch input that touches a first object in a first software screen displayed in an exposed area of a display included in the display module 1060. In a first state where the exposed area of the display is not extended, the processor 1020 may display the first software screen on the display. For example, the first software screen may include a lock screen of the electronic device 1001, a home screen, a setting screen, and an execution screen of an application. In addition, for example, the first object may be a graphical user interface element (GUI element) for executing a specific operation of the electronic device 1001. The first object may include, for example, an icon, a button, an image, and/or a text, but is not limited thereto.

For example, the first software screen may be a home screen, and the first object may be an execution icon of an application. For example, the first software screen may be an execution screen of an application, and the first object may be a GUI element in the execution screen of the application. The first touch input may be an input that selects the first object for a specific time. For example, the first touch input may be a touch and hold input or a long touch input, but is not limited thereto.

While maintaining the first touch input, the processor 1020 may receive a second touch input that moves in a specified direction on the first software screen. The second touch input may be a touch input that moves in a specific direction. For example, the second touch input may be a swipe input, a flick input, or a drag input having directionality.

While maintaining the first touch input, the processor 1020 may receive a second touch input that moves in a direction in which an exposed area of a display is extended. The direction in which the exposed area of the display is extended may be a direction in which a housing of the electronic device 1001 is slid to extend the exposed area of the display. For example, in order to extend the extended exposed area of the display, the processor 1020 may receive a second touch input that moves towards the top from the bottom of the display within a predefined angle range, and the housing of the electronic device 1001 may be slid in an upper direction of the electronic device 1001.

According to an embodiment, the input timing of the first touch input and the input timing of the second touch input, for extending and utilizing the exposed area of the display, may be preset. For example, in order to extend and utilize the exposed area of the display, the second touch input may be set to be input substantially simultaneously with the first touch input. Alternatively, for example, in order to extend and utilize the exposed area of the display, the second touch input may be set to be input within a predefined time range after the first touch input starts.

The processor 1020 may extend the exposed area of the display. When the second touch input that moves in a specified direction is received while the first touch input is maintained, the processor 1020 may extend the exposed area of the display. For example, as shown in FIGS. 2A, 2B, 3A, 3B, and 4, the processor 1020 may control the guide unit 420 to slide the second housing 220 or 320 with respect to the first housing 210 or 310 of the electronic device 1001, and extend the exposed area of the display 230, 330, or 430 of the electronic device 1001.

The processor 1020 may divide the extended exposed area into a first area and a second area. For example, the processor 1020 may divide the extended exposed area into the first area and the second area in order to display two contents in the extended exposed area. For example, the first area may be an area of an upper portion of the exposed area of the display, and the second area may be an area of a lower portion of the exposed area of the display, but are not limited thereto.

The processor 1020 may display content related to the first object and the first software screen in the first area and the second area, respectively. The processor 1020 may display the content related to the first object in the first area, and display the first software screen in the second area. Alternatively, the processor 1020 may display the content related to the first object in the second area, and display the first software screen in the first area.

The content related to the first object may be content displayed on the display of the electronic device 1001 as a result of executing a specific function of the electronic device 1001 corresponding to the first object. For example, when the first object is an execution icon of an application, the content related to the first object may be an execution screen of the application. For example, when the first object is a GUI element in an execution screen of an application, the content related to the first object may be content indicating a result of executing a function corresponding to the GUI element among functions of the application.

According to an embodiment, the processor 1020 may identify a time for which the first touch input is maintained. The processor 1020 may identify a time for which the first touch input is maintained or ended from the timing when the first touch input starts.

The processor 1020 may determine whether the time for which the first touch input is maintained exceeds a first threshold. The first threshold may be set wherein a menu regarding a function of the electronic device 1001 related to a first object is displayed when the first object is touched for the time exceeding the first threshold.

As it is determined that the time for which the first touch input is maintained has exceeded the first threshold, the processor 1020 may display a function menu related to the first object. For example, when the first object is an execution icon of an application and the first touch input exceeds the first threshold, a function menu related to a function for processing the displaying of the first object and a function of the application corresponding to the first object may be displayed on the display of the electronic device 1001. For example, when the first object is the execution icon of the application and the first touch input exceeds the first threshold, a function menu including an item for selecting the first object, an item for deleting the first object, an item for uninstalling the application corresponding to the first object, and an item for setting a widget of the application corresponding to the first object may be displayed around the first object.

As it is determined that the time for which the first touch input is maintained is less than the first threshold, the processor 1020 may determine whether the first touch input has ended.

When it is determined that the first touch input has ended, the processor 1020 may execute the application corresponding to the first object. For example, when the first object is an application execution icon, and the first touch input for the time less than the first threshold is ended for the first object, the processor 1020 may execute the application corresponding to the first object.

When it is determined that the first touch input has not ended, the processor 1020 may receive a second touch input that moves in a specified direction. While maintaining the first touch input for the time less than the first threshold, the processor 1020 may receive the second touch input. The second touch input may be a touch input that moves in a specific direction.

While maintaining the first touch input, the processor 1020 may receive a second touch input that moves in a direction in which the exposed area of the display is extended.

According to an embodiment, the processor 1020 may determine whether the first software screen is a screen of a preset type. For example, the processor 1020 may determine whether the first software screen is a screen of a type including an application execution icon. For example, the processor 1020 may determine whether the first software screen is a home screen. For example, the processor 1020 may determine whether the first software screen is a screen that presents a list of application execution icons.

When it is determined that the first software screen is the screen of the preset type, the processor 1020 may extend the exposed area of the display. When it is determined that the first software screen is not the screen of the preset type, the processor 1020 may enlarge the first software screen.

When the first software screen is not the screen of the preset type, the processor 1020 may present a function of enlarging the first software screen according to a first touch input and a second touch input, and may not present a function of extending the display. Accordingly, the function of extending the display according to the first touch input and the second touch input may be prevented from conflicting with a function of enlarging the first software screen on the display.

According to an embodiment, the processor 1020 may display a preview image and a control GUI for controlling a camera application, on an execution screen of a camera application displayed in an exposed area of a display. In a first state where the exposed area of the display of the electronic device 1001 is not extended, the processor 1020 may display the execution screen of the camera application on the display. For example, when the camera application is executed and a shooting function is activated, the processor 1020 may display, on the display, the execution screen of the camera application that includes the preview image and the control GUI for controlling the camera application. For example, the control GUI may include, but is not limited to, buttons for changing a shooting mode, a button for starting shooting, and a button for switching between a front camera and a rear camera.

The processor 1020 may receive a first touch input that touches a preview image. The first touch input may be an input that selects a first object for a specific time. For example, the first touch input may be a touch and hold input or a long touch input, but is not limited thereto.

While maintaining the first touch input, the processor 1020 may receive a second touch input that moves in a specified direction on an execution screen of a camera application. The second touch input may be a touch input that moves in a specific direction. For example, the second touch input may be a swipe input, a flick input, or a drag input having directionality.

While maintaining the first touch input, the processor 1020 may receive a second touch input that moves in a direction in which an exposed area of a display is extended. The direction in which the exposed area of the display is extended may be a direction in which a housing of the electronic device 1001 is slid to extend the exposed area of the display.

Thereafter, the processor 1020 may extend the exposed area of the display. As the second touch input that moves in a specific direction is received while the first touch input is maintained, the processor 1020 may extend the exposed area of the display.

The processor 1020 may divide the extended exposed area into a first area and a second area. For example, the processor 1020 may divide the extended exposed area into the first area and the second area, in order to display two contents in the extended exposed area. For example, the first area may be an area of an upper portion of the exposed area of the display, and the second area may be an area of a lower portion of the exposed area of the display, but are not limited thereto.

The processor 1020 may display the preview image in the first area, and display the control GUI having an added control button in the second area. For example, the added button of the control GUI may include, but is not limited to, buttons for changing the settings of a camera for shooting and buttons for editing a captured image.

According to an embodiment, the processor 1020 may receive a fourth touch input for the extended exposed area. In a state where the exposed area of the display of the electronic device 1001 is extended, the processor 1020 may display software screens in the first area and second area of the extended exposed area, respectively. The fourth touch input may be an input that touches the extended exposed area of the display for a specific time. For example, the fourth touch input may be a touch and hold input or a long touch input, but is not limited thereto.

While maintaining the fourth touch input, the processor 1020 may receive a fifth touch input that moves in a direction opposite to a specified direction. The fifth touch input may be a touch input that moves in a specific direction. For example, the fifth touch input may be a swipe input, a flick input, or a drag input having directionality.

While maintaining the fourth touch input, the processor 1020 may receive a fifth touch input that moves in a direction opposite to a direction in which the exposed area of the display is extended. The direction opposite to the direction in which the exposed area of the display is extended may be a direction in which a housing of the electronic device 1001 is slid to reduce the extended exposed area of the display. For example, in order to reduce the exposed area of the display, the processor 1020 may receive a fifth touch input that moves in a direction of going from the top to the bottom of the display within a predefined angle range, and the housing of the electronic device 1001 may be slid in a lower direction of the electronic device 1001.

According to an embodiment, the input timing of the fourth touch input and the input timing of the fifth touch input, for reducing the exposed area of the display, may be preset. For example, in order to reduce the exposed area of the display, the fifth touch input may be set to be input substantially simultaneously with the fourth touch input. Alternatively, for example, in order to reduce the exposed area of the display, the fifth touch input may be set to be input within a predefined time range after the fourth touch input starts.

The processor 1020 may reduce the exposed area. As the fifth touch input that moves in the direction opposite to the specified direction is received while the fourth touch input is maintained, the processor 1020 may reduce the extended exposed area of the display.

The processor 1020 may determine whether the fourth touch input had been input in the first area. The processor 1020 may determine whether the fourth touch input had been input through the first area or whether the fourth touch input had been input through the second area, among the first area and the second area that are divided areas of the extended exposed area.

As it is determined that the fourth touch input had been input in the first area, the processor 1020 may display, in the reduced exposed area, a software screen that is being displayed in the first area. For example, when an execution screen of an application of a first object had been displayed in the first area of the extended exposed area, the processor 1020 may display the execution screen of the application of the first object in the reduced exposed area.

As it is determined that the fourth touch input had not been input in the first area, the processor 1020 may display, in the reduced exposed area, a software screen that is being displayed in the second area. For example, as it is determined that the fourth touch input had been input in the second area, the processor 1020 may display, in the reduced exposed area, a software screen that is being displayed in the second area. For example, when a home screen had been displayed in the second area of the extended exposed area, the processor 1020 may display the home screen in the reduced exposed area.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1040) including one or more instructions that are stored in a storage medium (e.g., internal memory 1036 or external memory 1038) that is readable by a machine (e.g., the electronic device 1001). For example, a processor (e.g., the processor 1020) of the machine (e.g., the electronic device 1001) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A method for extending a display in an electronic device, the method comprising:
receiving a first touch input that touches a first object in a first software screen displayed in an exposed area of the display exposed to the outside of the electronic device;
while maintaining the first touch input, receiving a second touch input that moves in a specified direction on the first software screen;
in response to the receiving of the second touch input, extending the exposed area of the display exposed to the outside of the electronic device;
dividing the extended exposed area of the display into a first area and a second area; and
displaying content related to the first object and the first software screen in the first area and the second area, respectively.

2. The method of claim 1, wherein the first touch input is a touch and hold input, and the second touch input is a swipe input that moves in the specified direction.

3. The method of claim 1, wherein the first software screen is a home screen of the electronic device, and the first object is an execution icon of an application displayed on the home screen.

4. The method of claim 3, wherein the displaying of the content related to the first object and the first software screen respectively comprises:
displaying an execution screen of the application corresponding to the execution icon in the first area, and
displaying the home screen in the second area.

5. The method of claim 4, further comprising:
receiving a user input that selects a second object in the home screen displayed in the second area; and
in response to the selecting of the second object, displaying content related to the second object in the second area.

6. The method of claim 3, wherein the extending of the exposed area of the display is extending the exposed area, in response to receiving the second touch input within a time less than a first threshold after the first touch input starts.

7. The method of claim 6, further comprising
displaying a pop-up menu related to the first object, in response to maintaining the first touch input for a time greater than the first threshold after the first touch input starts.

8. The method of claim 1, further comprising identifying whether the first software screen is a home screen,
wherein the extending of the exposed area of the display is extending the exposed area of the display, in response to identifying that the first software screen is the home screen and receiving the second touch input.

9. The method of claim 1, wherein the first software screen is an execution screen of an Internet browser, and the first object is an object constituting a page in the Internet browser, and
displaying the content related to the first object and the first software screen respectively is
displaying another page linked to the first object in the first area; and
displaying the execution screen of the Internet browser in the second area.

10. The method of claim 1, further comprising:
receiving a third touch input that touches the first area;
while maintaining the third touch input, receiving a fourth touch input that moves in a direction opposite to the specified direction;
in response to the receiving of the fourth touch input, reducing the exposed area of the display exposed to the outside of the electronic device; and
displaying, in the reduced exposed area, content related to the first object displayed in the first area.

11. An electronic device comprising:
a flexible display;
a memory configured to store instructions; and
a processor operatively connected to the flexible display and the memory and configured to execute the instructions,
wherein the processor executes the instructions to:
receive a first touch input that touches a first object in a first software screen displayed in an exposed area of the flexible display exposed to the outside of the electronic device;
while maintaining the first touch input, receive a second touch input that moves in a specified direction on the first software screen;
in response to the receiving of the second touch input, extend the exposed area of the flexible display exposed to the outside of the electronic device;
divide the extended exposed area of the flexible display into a first area and a second area; and
display content related to the first object and the first software screen in the first area and the second area, respectively.

12. The electronic device of claim 11, wherein the first touch input is a touch and hold input, and the second touch input is a swipe input that moves in the specified direction.

13. The electronic device of claim 11, wherein the first software screen is a home screen of the electronic device, and the first object is an execution icon of an application displayed on the home screen.

14. The electronic device of claim 13, wherein the processor executes the instructions to:
display an execution screen of the application corresponding to the execution icon in the first area, and
display the home screen in the second area.

15. The electronic device of claim 14, wherein the processor executes the instructions to:
receive a user input that selects a second object in the home screen displayed in the second area; and
in response to the selecting of the second object, display content related to the second object in the second area.
